# EUROPÄISCHE PATENTANMELDUNG

(11) **EP 1 536 132 A2**
(43) Veröffentlichungstag der Anmeldung: **01.06.2005**
(21) Anmeldenummer: 04450214.4
(22) Anmeldetag: 19.11.2004
(51) Int. Cl.: F03B 3/08

(54) **Turbine für ein Wasserkraftwerk**

(30) Priorität: 27.11.2003 AT 19042003
(71) Anmelder: Markopulos, Johannes, 2512 Tribuswinkel (AT)
(72) Erfinder: Markopulos, Johannes, 2512 Tribuswinkel (AT)
(74) Vertreter: Weiser, Andreas, Dr.

(57) **Zusammenfassung**

Turbine für ein Wasserkraftwerk, mit einem Rotor (1) mit vertikaler Drehachse, der an einem Gestell drehbar gelagert ist, und an seinem oberen Ende einen Einlaufbehälter (9) aufweist, von dem mehrere Strömungskanäle (7) an unterschiedlichen Höhen über den Umfang verteilt ausgehen, wobei jeder Strömungskanal (7) zumindest teilweise um die Drehachse herum und bis zum unteren Ende des Rotors (1) verläuft und dort tangential ausmündet.

## Beschreibung

Die vorliegende Erfindung betrifft eine Turbine für ein Wasserkraftwerk, mit einem Rotor mit vertikaler Drehachse, der an einem Gestell drehbar gelagert ist und mindestens einen Strömungskanal aufweist, welcher zumindest teilweise um die Drehachse herum und bis zum unteren Ende des Rotors verläuft und dort tangential ausmündet.

Eine derartige Turbine ist z.B. aus der AT 207 634 B bekannt und weist einen konischen Rotor mit einem einzigen wendelförmigen Strömungskanal auf. Für einen Einsatz in Kleinstwasserkraftwerken für Bäche oder kleine Flüsse mit jahreszeitlich stark schwankenden Durchflußmengen ist diese Turbine wenig geeignet, denn der Strömungskanal ist entweder nur gering ausgelastet oder bereits überlastet. Im ersten Fall wird die Nenndrehzahl der Maschine nicht erreicht, im zweiten Fall die verfügbare Wasserenergie nicht ausgenützt.

Zur Anpassung an stark schwankende Durchflußmengen sind bei herkömmlichen Kaplan- oder Schaufelradturbinen auch verstellbare Rotor- oder Schaufelradblätter bekann, deren Konstruktion und Fertigung jedoch aufwendig und kostspielig ist. Ein rentabler Betrieb von Kleinstwasserkraftwerken ist damit ebenfalls nicht möglich.

Die Erfindung setzt sich zum Ziel, eine Turbine für ein Wasserkraftwerk zu schaffen, welche für stark schwankende Durchflußmengen, selbst bei geringen Gefällen, geeignet ist und besonders einfach und kostengünstig aufgebaut ist. Dieses Ziel wird mit einer Turbine der einleitend genannten Art erreicht, die sich gemäß der Erfindung dadurch auszeichnet, daß der Rotor mehrere Strömungskanäle und an seinem oberen Ende einen Einlaufbehälter aufweist, von dem die Strömungskanäle jeweils an unterschiedlichen Höhen ausgehen, bevorzugt über den Umfang verteilt ausgehen.

Auf diese Weise wird eine Turbine geschaffen, welche sich selbsttätig auf unterschiedliche Durchflußmengen einstellt, ohne daß verstellbare Klappen, Rotore oder Blätter vorgesehen werden müßten. Sobald der Füllstand im Einlaufbehälter aufgrund der zu verarbeitenden Durchflußmenge bis zur Ansatzhöhe eines nächsten Strömungskanals ansteigt, geht dieser in Betrieb. In jedem Strömungskanal strömt das Wasser wendel- oder teilwendelförmig nach unten und verläßt den Rotor tangential, wodurch dieser nach dem Rückstoßprinzip angetrieben wird.

Die Konstruktion der Erfindung hat keine mechanisch verstellbaren Rotorteile und ist damit wesentlich einfacher und kostengünstiger als die bekannten Lösungen. Darüber hinaus treten auch kein Verschleiß und keine Wartungskosten auf. Durch entsprechende Wahl der Anzahl der Strömungskanäle ist die Turbine modular an unterschiedliche maximale Durchflußmengen anpaßbar. Das zur Anwendung kommende Rückstoßprinzip ist auch für geringe Bauhöhen geeignet, sodaß die Turbine der Erfindung auch bei Flüssen mit geringem Gefälle einsetzbar ist. Insgesamt ermöglicht die Erfindung eine kompakte, kostengünstige und wartungsfreundliche Konstruktion einer Turbine für einen rentablen Betrieb von Kleinstwasserkraftwerken mit stark schwankendem Wasseranfall.

Eine bevorzugte Ausführungsform der Erfindung zeichnet sich dadurch aus, daß der Einlaufbehälter trichterförmig nach unten verjüngt ist, besonders bevorzugt abgestuft trichterförmig. Dadurch kann ein Sättigungsverhalten der Umdrehungsgeschwindigkeit des Rotors bei Belastungsspitzen erreicht werden.

Besonders günstig ist es, wenn gemäß einem weiteren bevorzugten Merkmal der Erfindung der Strömungskanal in an sich bekannter Weise mit von oben nach unten zunehmendem Radialabstand um die Drehachse verläuft. Dadurch kann die Austrittsgeschwindigkeit des Wassers an der Mündung der Strömungskanäle optimiert werden.

Die Strömungskanäle können auf beliebige Art gebildet werden, beispielsweise durch Rohrleitungen oder Kanäle in einem vollwandigen Rotor. Bevorzugt werden die Strömungskanäle jedoch jeweils durch einen Schlauch gebildet, was eine besonders einfache und kostengünstige Lösung darstellt.

Dabei weist der Rotor bevorzugt zumindest einen oberen und einen unteren Kranz auf, die über von oben nach unten verlaufende Stäbe miteinander verbunden sind, auf denen der Schlauch festgelegt ist. Auf diese Weise kann die Anzahl der Schläuche bei der Fertigung entsprechend dem gewünschten Fassungsvermögen modular variiert werden.

Besonders bevorzugt sind die Klemmen an den Stäben anliegende weitere Stäbe ("Gegenstäbe"), welche den Schlauch mit Hilfe von Ausnehmungen in den Stäben oder den weiteren Stäben halten, was eine besonders einfache und rasche Montage ermöglicht.

Eine besonders kostengünstige Variante ergibt sich, wenn der Rotor bevorzugt aus Kunststoff gefertigt ist.

Der Abtrieb der Turbine kann in herkömmlicher Weise an der Welle des Rotors erfolgen. Alternativ kann vorgesehen werden, daß der Rotor zumindest einen Umfangsrand aufweist, an welchen zumindest eine Abtriebswelle mit Reibeingriff anstellbar ist. Dadurch können auf einfache Weise auch mehrere Abtriebswellen angekuppelt werden, beispielsweise um den Rotor bei zunehmender Drehzahl mit weiteren Lasten, z.B. Elektrogeneratoren, zu beaufschlagen.

Gemäß einem weiteren bevorzugten Merkmal der Erfindung bietet das Gestell in der Ausmündungsbahn der Strömungskanäle Spritzplatten dar, wodurch sich die Rückstoßwirkung in bestimmten Betriebssituationen verstärkt.

Schließlich ist es besonders günstig, wenn die Oberseite des Gestells einen Trichter bildet, dessen Auslauf auf den Einlaufbehälter des Rotors gerichtet ist. Das Gestell kann damit beispielsweise hinter einem Überlaufwehr installiert werden, wobei das Wasser direkt über das Wehr auf die Oberseite des Gestells läuft.

Die Erfindung wird nachstehend anhand von in den Zeichnungen dargestellten Ausführungsbeispielen näher erläutert. In den Zeichnungen zeigen
die Fig. 1 und 2 die Turbine der Erfindung in einer schematischen Seitenansicht bzw. einer schematischen Draufsicht;
die Fig. 3a und 3b den Einlaufbehälter des Rotors mit einem ausschnittsweisen Teil des Behälters in einer gesprengten Seitenansicht und Fig. 3c eine Draufsicht auf den Teil von Fig. 3b;
Fig. 4 eine weitere Ausführungsform der Turbine der Erfindung in ihrer Einbaustellung in einem Flußbett in einer schematischen Seitenansicht;
die Fig. 5a bis 5d weitere Einsatzmöglichkeiten und Ausführungsformen der Turbine der Erfindung;
Fig. 6 zeigt eine alternative Ausführungsform der Turbine ähnlich der Fig. 1; und
Fig. 7 eine alternative Ausführungsform des Einlaufbehälters ähnlich den Fig. 3a und 3b.

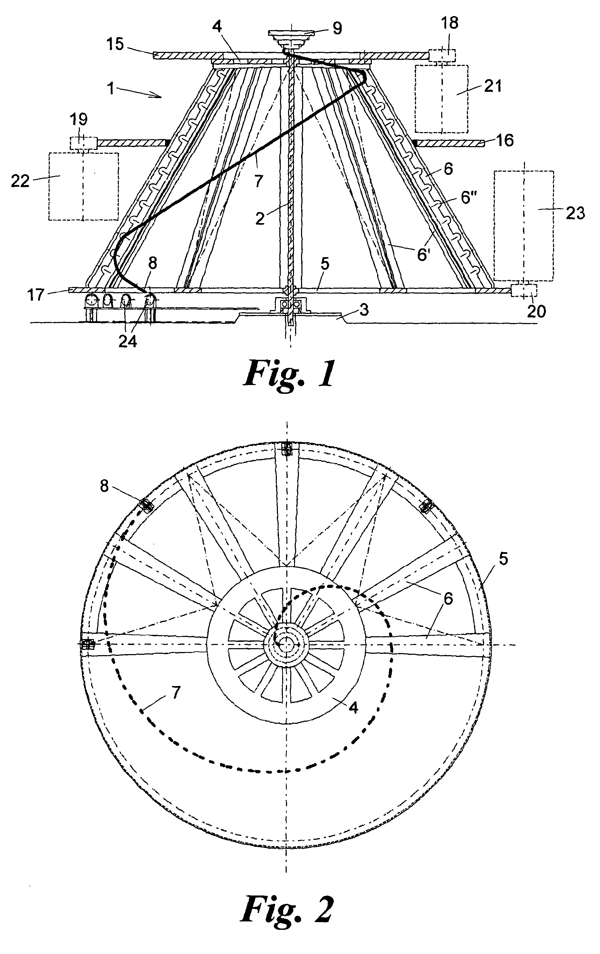

Die in Fig. 1 gezeigte Turbine für ein Wasserkraftwerk umfaßt einen Rotor 1 mit vertikaler Drehachse, dessen Welle 2 an einem Gestell 3 drehbar gelagert ist. Der Rotor 1 besitzt im wesentlichen Kegelstumpfform mit einem oberen Kranz 4 und einem unteren Kranz 5, die über schräg nach unten verlaufende Stäbe 6 miteinander verbunden sind.

Auf den Innen- oder Außenumfang des kegelstumpfförmigen Rotors 1 sind mehrere Strömungskanäle in Form von Schläuchen 7 über den Umfang verteilt aufgewickelt, von denen in den Fig. 1 und Fig. 2 nur einer stellvertretend gezeigt ist. Die Schläuche 7 verlaufen wendelförmig oder - soferne sie sich nur teilweise um die Drehachse des Rotors 1 erstrecken - teil-wendelförmig von oben nach unten und münden am unteren Ende des Rotors 1 bei 8 tangential aus, d.h. ins Freie.

Die Schläuche 7 sind auf den Stäben 6 mit Hilfe von weiteren Stäben bzw. Gegenstäben 6' gehalten, genauer in Ausnehmungen 6" der Stäbe 6. Bei der Montage können die Schläuche 7 in der genannten Wendelform einfach in die Ausnehmungen 6" der Stäbe 6 "eingeclipst" und anschließend mit Hilfe der Gegenstäbe 6' fixiert werden.

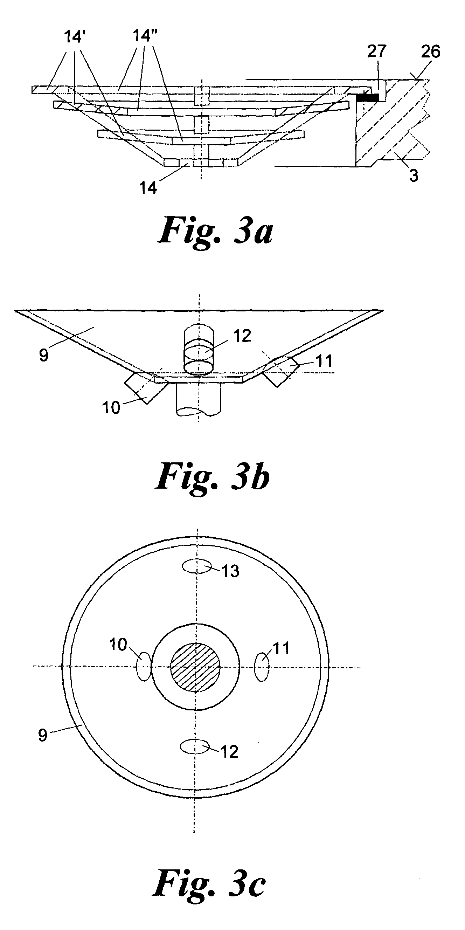

An ihrem oberen Ende gehen die Strömungskanäle bzw. Schläuche 7 von einem Einlaufbehälter 9 aus, der in den Fig. 3a bis 3c ausführlicher gezeigt ist. Der Einlaufbehälter 9 hat im wesentlichen Trichterform und besitzt mehrere über den Umfang verteilte und auf unterschiedlichen Höhen ansetzende Öffnungen bzw. Stutzenanschlüsse 10 - 13, von denen jeweils ein Schlauch 7 ausgeht. Wie in Fig. 1 gezeigt, kann der Einlaufbehälter 9 auch eine stufenförmige bzw. abgestufte Trichterform haben, wobei die Stufen entsprechend den Höhenabstufungen der Stutzenanschlüsse gewählt werden.

Fig. 3a zeigt Einbauten 14 in der Art von Strömungsschikanen, welche in das Innere des Einlaufbehälters 9 eingesetzt werden können oder vom Gehäuse 3 ausgehend in dieses eingreifen können.

Um den Rotor 1 in Drehung zu versetzen, wird der Einlaufbehälter 9 mit Wasser gespeist, wobei mit zunehmender Durchflußmenge und damit zunehmendem Füllstand im Einlaufbehälter 9 zunächst der Anschlußstutzen 10, dann der Anschlußstutzen 11, dann der Anschlußstutzen 12 und schließlich der Anschlußstutzen 13 und somit ein Schlauch 7 nach dem anderen beaufschlagt werden.

Es versteht sich, daß die Anzahl der Öffnungen bzw. Anschlußstutzen 10 - 13 und der damit korrespondierenden Strömungskanäle bzw. Schläuche 7 beliebig gewählt werden kann, insbesondere je nach der maximal zu erwartenden Wassermenge.

Zurückkehrend auf Fig. 1 ist der Rotor 1 an seinem Umfang mit drei Umfangsflanschen bzw. -rändern 15 - 17 versehen, welche für den Reibeingriff von Abtriebswellen 18 - 20 elektrischer Generatoren 21 - 23 dienen. Durch einen Drehzahlmesser (nicht gezeigt) gesteuert werden die Generatoren 21 - 23 bei zunehmender Drehzahl sukzessive in Reibeingriff mit den Umfangsrändern 15 - 17 gebracht, wodurch der Rotor zunehmend belastet und seine Drehzahl innerhalb vorgegebener Grenzen gehalten wird.

Im Bereich der Bewegungsbahn der Ausmündungen 8 der Schläuche 7 können gestellfeste Spritzplatten 24 montiert sein, welche den Rückstoß des austretenden Wassers zurücklenken und in bestimmten Betriebssituationen verstärken.

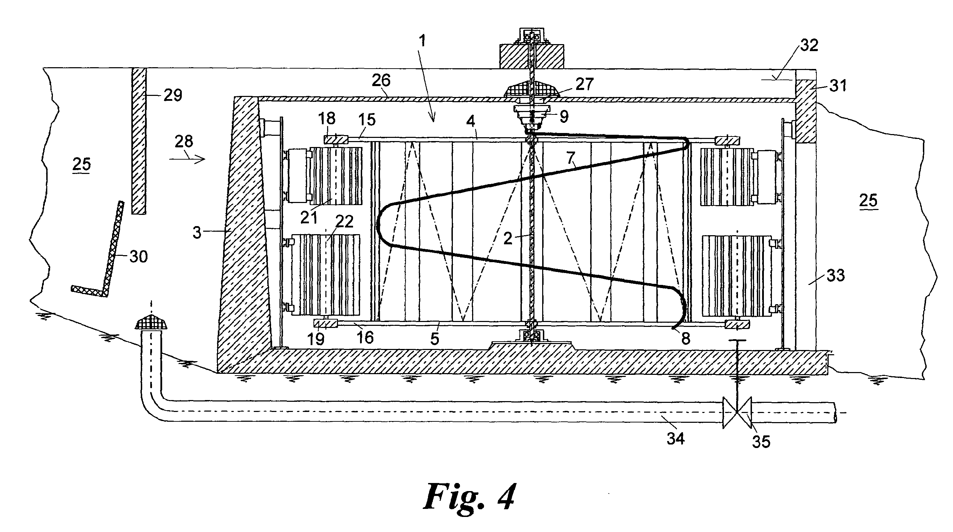

Fig. 4 zeigt eine alternative Ausführungsform einer Turbine in ihrer Verwendungsstellung in einem Flußbett 25. Gleiche Bezugszeichen bezeichnen gleiche Teile wie in den Fig. 1 - 3, mit Ausnahme der folgenden Elemente.

Das Gestell 3 ist hier als Gehäuse aus Beton ausgebildet, welches am Boden des Flußbetts 25 ruht. Die Oberseite 26 des Gestells 3 bildet einen Trichter mit schwacher Neigung (in der Zeichnung nicht erkennbar) und einem zentralen Auslauf 27, welcher auf den Einlaufbehälter 9 des Rotors 1 gerichtet ist (siehe auch Fig. 3a).

Der Rotor 1 besitzt hier etwa zylindrische Form, ist jedoch sonst wie in den Fig. 1 bis Fig. 3 dargestellt aufgebaut.

Der Turbine in Strömungsrichtung 28 des Flusses vorgeordnet ist ein Staudamm 29 mit einem Rechen 30. In Strömungsrichtung 28 gesehen hinter der Turbine befindet sich ein Überlaufwehr 31, welches den Wasserstand über der Oberseite 26 des Gestells 3 auf ein maximales Niveau 32 begrenzt. Im Betrieb rinnt das Wasser über die trichterförmige Oberseite 26 und den Auslauf 27 in den Einlaufbehälter 9, durchsetzt die Schläuche 7 und treibt den Rotor 1 an und verläßt das Gestell 3 an einer stromabwärtigen Öffnung 33 zum Flußbett 25.

Mit Hilfe eines Kanals 34 und eines Hahns 35 können der Bereich des Flußbettes 25 hinter dem Staudamm 29 und/oder das Innere des Gestells 3 zu Reinigungs- oder Wartungszwecken entleert werden.

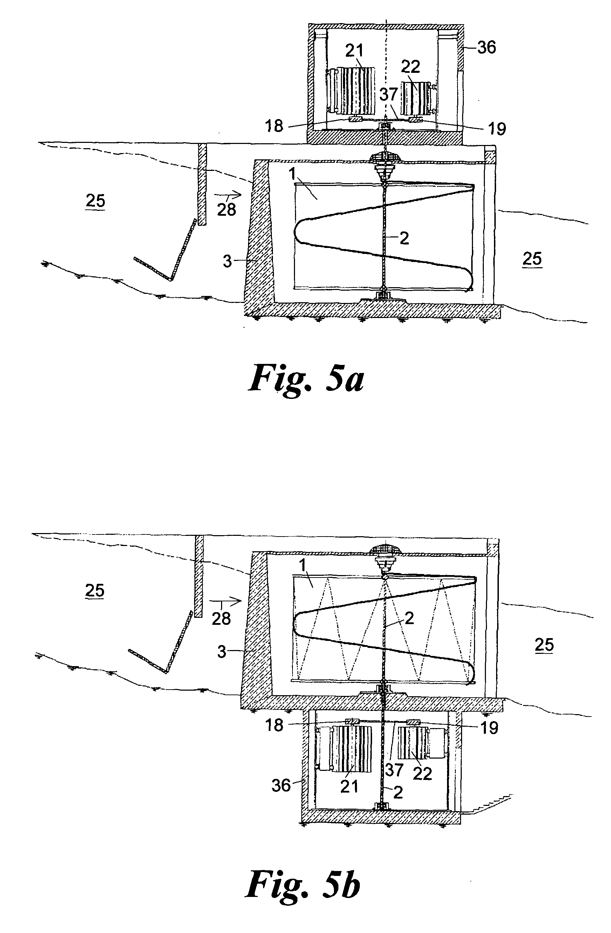

Die Fig. 5a und 5b zeigen zwei alternative Varianten der Ankupplung der elektrischen Generatoren 21, 22. Die Generatoren 21, 22 sind in einem gesonderten Generatorgehäuse 36 enthalten, welches oberhalb (Fig. 5a) oder unterhalb (Fig. 5b) des Gestells 3 angeordnet ist. Die Welle 2 des Rotors 1 ist in das Generatorgehäuse 36 hinein verlängert und trägt dort eine oder mehrere Abtriebsscheiben 37, an welche die Antriebsritzel 18, 19 der Generatoren 21, 22 mit Reibeingriff anstellbar sind.

Fig. 5c zeigt eine weitere alternative Ausführungsform der Turbine in der Draufsicht. Die Turbine ist direkt hinter dem Staudamm 29 montiert und die Oberseite des Gestells. 3 schließt unmittelbar an die Oberkante des Staudamms 29 an. Das Wasser überströmt den Staudamm 29 in der Art eines Überlaufwehres und fließt über die Oberseite 26 zum Auslauf 27 und in den Einlaufbehälter 9 des Rotors 1.

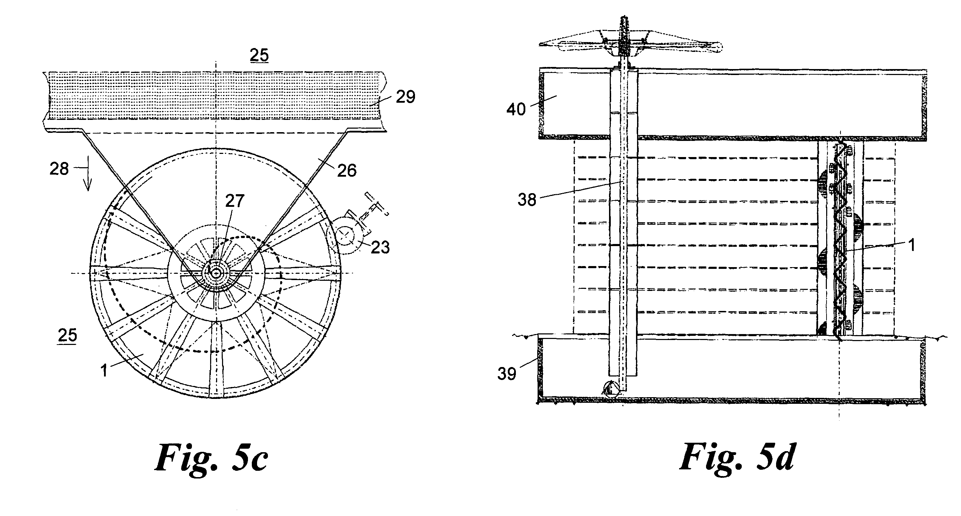

Fig. 5d zeigt eine Anwendung der Turbine mit zylindrischem Rotor 1 in einer kombinierten Wind- und Wasserkraftanlage. Eine windbetriebene Pumpe 38 fördert Wasser aus einem unteren Speicher 39 in einen oberen Speicher 40, aus welchem es über die Turbine 1 zurück in den unteren Speicher 39 fließt. Dadurch kann die Windenergie in Form der potentiellen Energie des Wassers im oberen Speicher 40 gespeichert und bei Bedarf mit Hilfe der Turbine 1 und daran angeschalteter Generatoren entnommen werden.

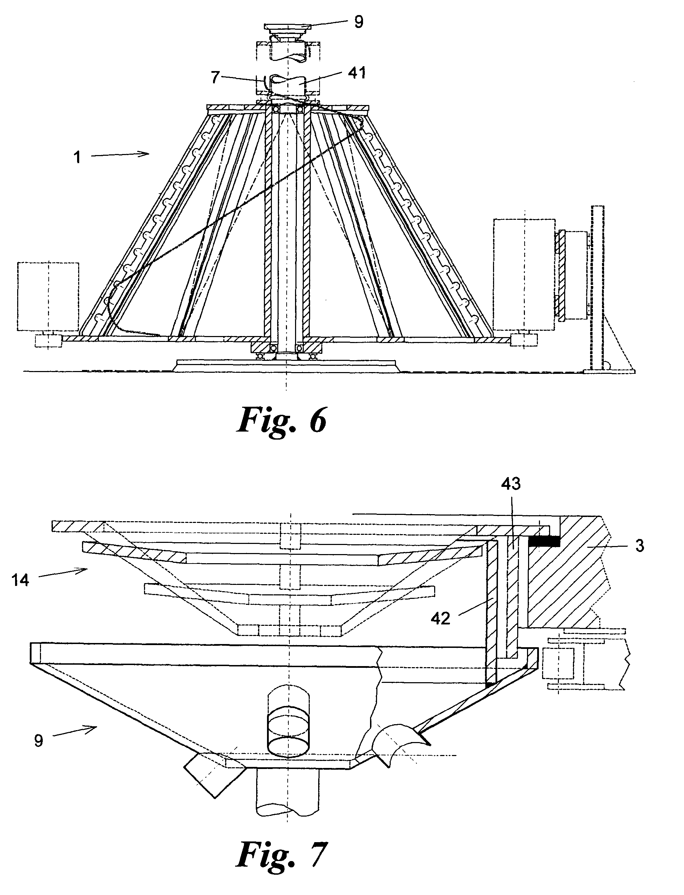

Die in Fig. 6 gezeigte Turbine ist im wesentlichen gleich wie die Turbine von Fig. 1 aufgebaut, mit den folgenden Modifikationen. Der Rotor 1 ist hier oberhalb seines kegelstumpfförmigen Bereiches durch einen zylindrischen Teil 41 verlängert. Der zylindrische Teil 41 kann eine beträchtliche Höhe haben, beispielsweise bis zu 2 Meter (in Fig. 6 unterbrochen dargestellt). Der Einlaufbehälter 9 sitzt an der Oberseite des zylindrischen Teiles 41 und die Schläuche 7 verlaufen von dort wendelförmig über den Umfang des zylindrischen Teiles 41 nach unten bis zu dem anhand der Fig. 1 und 2 beschriebenen kegelstumpfförmigen Teil des Rotors 1. Dadurch kann ein Rotor mit großer Fallhöhe und damit großer Leistung bei gleichzeitig geringem Außendurchmesser aufgebaut werden.

Fig. 7 zeigt eine alternative Ausführungsform des Einlaufbehälters 9 und seiner Einbauten 14. Der Einlaufbehälter 9 ist hier an seinem oberen Ende durch einen zylindrischen Kragen 42 verlängert. Das Gestell 3, bzw. genauer die daran befestigten Einbauten 14, weisen einen nach unten ragenden Rand 43 auf, welcher den Kragen 42 mit Gleitsitz übergreift. Auf diese Weise kann sich der Kragen 42 des Einlaufbehälters 9 im Inneren des Randes 43 drehen, um den Rotor 1 an seinem oberen Ende zu lagern. Die Ausführungsform von Fig. 7 ist damit besonders zur Drehlagerung eines Rotors mit großer Bauhöhe wie des Rotors von Fig. 6 geeignet.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Turbine für ein Wasserkraftwerk, mit einem Rotor (1) mit vertikaler Drehachse, der an einem Gestell (3) drehbar gelagert ist und mindestens einen Strömungskanal (7) aufweist, welcher zumindest teilweise um die Drehachse herum und bis zum unteren Ende des Rotors (1) verläuft und dort tangential ausmündet, **dadurch gekennzeichnet, daß** der Rotor (1) mehrere Strömungskanäle (7) und an seinem oberen Ende einen Einlaufbehälter (9) aufweist, von dem die Strömungskanäle (7) jeweils an unterschiedlichen Höhen ausgehen, bevorzugt über den Umfang verteilt ausgehen.

2. Turbine nach Anspruch 1, **dadurch gekennzeichnet, daß** der Einlaufbehälter (9) trichterförmig nach unten verjüngt ist, bevorzugt abgestuft trichterförmig.

3. Turbine nach Anspruch 1 oder 2, **dadurch gekennzeichnet, daß** der Strömungskanal (7) in an sich bekannter Weise mit von oben nach unten zunehmendem Radialabstand um die Drehachse verläuft.

4. Turbine nach einem der Ansprüche 1 bis 3, **dadurch gekennzeichnet, daß** der Strömungskanal (7) durch einen Schlauch gebildet ist.

5. Turbine nach Anspruch 4, **dadurch gekennzeichnet, daß** der Rotor (1) zumindest einen oberen und einen unteren Kranz (4, 5) aufweist, die über von oben nach unten verlaufende Stäbe (6) miteinander verbunden sind, auf denen der Schlauch (7) festgelegt ist.

6. Turbine nach Anspruch 5, **dadurch gekennzeichnet, daß** die Klemmen an den Stäben (6) anliegende weitere Stäbe (6') sind, welche den Schlauch (7) mit Hilfe von Ausnehmungen (6") in den Stäben (6) oder den weiteren Stäben (6') halten.

7. Turbine nach einem der Ansprüche 1 bis 6, **dadurch gekennzeichnet, daß** der Rotor (1) aus Kunststoff gefertigt ist.

8. Turbine nach einem der Ansprüche 1 bis 7, **dadurch gekennzeichnet, daß** der Rotor (1) zumindest einen Umfangsrand (15 - 17) aufweist, an welchen zumindest eine Abtriebswelle (18 - 20) mit Reibeingriff anstellbar ist.

9. Turbine nach einem der Ansprüche 1 bis 8, **dadurch gekennzeichnet, daß** das Gestell (3) in der Ausmündungsbahn der Strömungskanäle (7) Spritzplatten (24) darbietet.

10. Turbine nach einem der Ansprüche 1 bis 9, **dadurch gekennzeichnet, daß** die Oberseite (26) des Gestells (3) einen Trichter bildet, dessen Auslauf (27) auf den Einlaufbehälter (9) des Rotors (1) gerichtet ist.
